(19) **Europäisches Patentamt / European Patent Office / Office européen des brevets**

(11) **EP 3 891 469 B1**

(12) **FASCICULE DE BREVET EUROPEEN**

(45) Date de publication et mention de la délivrance du brevet:
**21.06.2023 Bulletin 2023/25**

(21) Numéro de dépôt: **19812953.8**

(22) Date de dépôt: **27.11.2019**

(51) Classification Internationale des Brevets (IPC):
**G01C 21/16** *(2006.01)*   **G01S 19/47** *(2010.01)*

(52) Classification Coopérative des Brevets (CPC):
**G01C 21/165; G01S 19/47**

(86) Numéro de dépôt international:
**PCT/EP2019/082654**

(87) Numéro de publication internationale:
**WO 2020/114842 (11.06.2020 Gazette 2020/24)**

(54) **SYSTEME AHRS HYBRIDE COMPORTANT UN DISPOSITIF DE MESURE DE L'INTEGRITE DE L'ATTITUDE CALCULEE**

AHRS-HYBRIDSYSTEM MIT EINER VORRICHTUNG ZUR MESSUNG DER INTEGRITÄT DER BERECHNETEN LAGE

HYBRID AHRS SYSTEM COMPRISING A DEVICE FOR MEASURING THE INTEGRITY OF THE CALCULATED ATTITUDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2018 FR 1872262**

(43) Date de publication de la demande:
**13.10.2021 Bulletin 2021/41**

(73) Titulaire: **THALES**
**92400 Courbevoie (FR)**

(72) Inventeurs:
• **DE GRANCEY, Florence**
**26000 Valence (FR)**
• **COATANTIEC, Jacques**
**26000 Valence (FR)**

(74) Mandataire: **Atout PI Laplace**
**Immeuble "Visium"**
**22, avenue Aristide Briand**
**94117 Arcueil Cedex (FR)**

(56) Documents cités:
**US-A- 5 512 903**

**Description**

Le domaine de l'invention est principalement celui de la navigation aéronautique et, en particulier, des systèmes de mesures hybridés mettant en oeuvre à la fois des unités de mesure inertielles et des moyens de géolocalisation par satellite.

Les systèmes dits « AHRS », acronyme signifiant « Attitude and Heading Reference System », sont des équipements intégrant des mesures inertielles d'accélérations et de rotations angulaires afin de déterminer les attitudes d'un porteur. On entend par attitude l'orientation du porteur dans l'espace. Ce porteur est généralement un aéronef. Dans ce cas, l'attitude est typiquement définie par les valeurs de roulis, de tangage et de lacet.

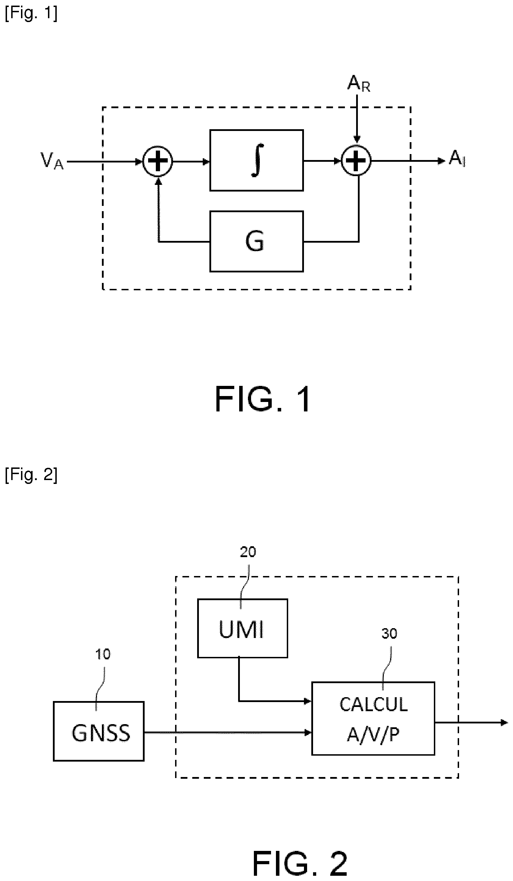

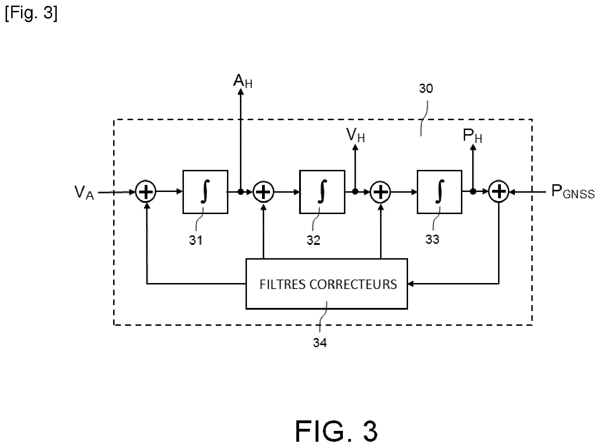

En raison des défauts des mesures des différents senseurs, ces attitudes sont erronées et la quantité d'erreur est incrémentale. Dans certaines AHRS telles que celle représentée sur la figure 1, on corrige les attitudes intégrées $A_I$ obtenues après intégration des vitesses angulaires $V_A$ en les comparant à des attitudes de référence $A_R$ qui sont généralement des attitudes dites accélérométriques obtenues par la projection de la gravité terrestre sur des axes horizontaux liés au porteur. L'écart entre les attitudes AHRS et les attitudes de référence est rebouclé avec un certain gain G. Sur cette figure et sur la figure 3, les intégrateurs sont représentés par le symbole de l'intégration figuré par un S allongé.

Afin d'améliorer la précision du système, les mesures inertielles peuvent être fusionnées avec des mesures provenant d'un système de navigation par satellites, système dit « GNSS », acronyme signifiant « Global Navigation Satellite System ».

Dans le contexte aéronautique, les données concernant l'attitude de l'appareil sont exigées avec une quantification en temps réel de leur intégrité, c'est-à-dire de la probabilité que l'erreur de mesure soit supérieure à un seuil déterminé prenant en compte les différentes causes de défaillances possibles. Par exemple, une intégrité inférieure à $10^{-7}$ par heure est fréquemment exigée pour des mesures d'attitudes d'un aéronef.

Les attitudes issues des AHRS sont fournies sans quantification de leur intégrité. Il est cependant possible d'estimer cette intégrité sous réserve d'utiliser un algorithme voisin de celui des centrales inertielles hautes performances. Cette méthode impose :

- Une forte complexité et une charge de calcul élevée, l'intégrité des centrales inertielles étant estimée grâce à l'emploi en parallèle de plusieurs filtres de Kalman. La demande européenne de référence EP 3 018 447 intitulée « Procédé de détermination d'un rayon de protection associé à un paramètre de navigation d'un système hybride de navigation inertielle et système associé » propose une première solution de ce type. Le brevet US 9 341 718 intitulé « Method and System for providing integrity for hybrid attitude and true heading » propose également une solution de ce type.
- Des contraintes de performances sur les senseurs inertiels des centrales AHRS, afin de disposer d'une précision autorisant l'utilisation de filtres de Kalman. A titre d'exemple, la dérive des gyromètres doit être inférieure à dix degrés par heure.

Le système hybride selon l'invention ne présente pas les inconvénients précédents. En effet, l'estimation d'attitude est réalisée de manière conventionnelle. Des positions AHRS sont estimées par triple intégration des mesures inertielles AHRS. Ces positions hybrides AHRS sont comparées avec les positions GNSS pour en déduire des corrections. Ces corrections sont appliquées sur les données hybrides.

L'invention porte sur la production d'une mesure de l'intégrité de ces attitudes. Dans ce contexte, la demande US 5 512 903 A propose le calcul d'un rayon angulaire de protection.

Dans le système selon l'invention, l'intégrité est estimée grâce à la connaissance des fonctions de transfert du filtre d'hybridation, de la valeur du rayon de protection associé à la position donnée par le récepteur du système de positionnement par satellites et par le calcul d'une constante majorante issue de la connaissance du système AHRS hybridé. Le rayon de protection est calculé pour une intégrité de $10^{-7}$/h.

Plus précisément, l'invention a pour objet un système de mesure d'attitude d'un porteur, ledit système étant hybridé et comportant au moins :

- un système de positionnement par satellites ;
- une unité de mesure comportant trois gyromètres et trois accéléromètres ;
- une électronique de calcul des informations d'attitude du porteur à partir des informations issues du système de positionnement par satellites et de l'unité de mesure, l'électronique de calcul comportant un moyen de calcul d'un rayon angulaire de protection, c'est-à-dire un rayon angulaire tel que le risque que l'erreur entre l'attitude calculée et l'attitude vraie du porteur ne soit pas comprise à l'intérieur de ce rayon est inférieur à une probabilité donnée, ledit rayon étant égal à la somme de deux contributions, la seconde contribution étant égale aux erreurs induites sur les estimations d'attitude par les erreurs de position dues au système de positionnement par satellite, en prenant en compte l'hypothèse d'une panne du système de positionnement par satellites, ledit système de positionnement par satellites garantissant que, sous une probabilité de panne donnée, l'erreur sur la position est en-dessous d'un rayon d'intégrité, au-dessus de ce rayon d'intégrité, le système de positionnement par satellites se déclarant en panne, caractérisé en ce que la première contribution est égale aux erreurs d'attitudes liées à l'unité de mesure.

Avantageusement, la première contribution est égale à l'erreur de positionnement maximale obtenue à partir de simulations de Monte-Carlo prenant en compte l'ensemble des erreurs possibles de l'unité de mesure.

Avantageusement, la seconde contribution est égale au produit :

du gain d'une fonction de transfert de l'électronique de calcul de l'attitude du porteur, ladite fonction de transfert étant déterminée pour une fréquence d'oscillation de la position donnée par le système de positionnement par satellites ;

par la valeur du rayon de protection du système de positionnement par satellites, ladite valeur étant connue sous la terminologie « HIL », acronyme de « Horizontal Integrity Limit ».

Avantageusement, l'électronique de calcul de l'attitude comporte trois intégrateurs en série et un filtre correcteur à gains constants, les données d'entrée du premier intégrateur étant les informations de vitesses angulaires du porteur et les données d'entrée du deuxième intégrateur étant les accélérations du porteur et le résultat du premier intégrateur, les données d'entrée du troisième intégrateur étant le résultat du deuxième intégrateur initialisées par les informations de position données par le système de positionnement par satellites, les données de sortie du premier intégrateur étant les informations d'attitude du porteur dite attitude hybridée, les données de sortie du second intégrateur étant les informations de vitesse du porteur dite vitesse hybridée et les données de sortie du troisième intégrateur étant les informations de position du porteur dite position hybridée.

Avantageusement, le rayon angulaire de protection est inférieur à 1 degré.

Avantageusement, l'intégrité associée au rayon de protection angulaire est comprise entre $10^{-5}$/heure d'utilisation et $10^{-9}$/heure d'utilisation.

Avantageusement, le porteur est un aéronef.

L'invention sera mieux comprise et d'autres avantages apparaîtront à la lecture de la description qui va suivre donnée à titre non limitatif et grâce aux figures annexées parmi lesquelles :

[Fig.1] précédemment commentée, représente une centrale AHRS selon l'art antérieur ;

[Fig.2] représente un système de mesure d'attitude d'un porteur selon l'invention ;

[Fig.3] représente une électronique de calcul des informations d'attitude selon l'invention.

Le système de mesure d'attitude selon l'invention est, comme il a été dit, un système hybride. Il est représenté sur la figure 2. Il est intégré à un porteur, non représenté sur cette figure. Il comporte au moins :

- un système 10 de positionnement par satellites GNSS ;
- une unité de mesure inertielle « UMI » 20 comportant des gyromètres et des accéléromètres ;
- une électronique 30 de calcul des informations hybridées d'attitude A, de vitesse V et de positionnement P du porteur à partir des informations issues du système de positionnement par satellites 10 et de l'unité de mesure 20.

Le système de mesure fonctionne en temps réel.

Les systèmes de positionnement par satellites 10 sont connus de l'homme du métier. Ils fournissent en temps réel les informations de position du porteur. De la même façon, les unités de mesure de la vitesse angulaire et de l'accélération 20 sont connues de l'homme du métier.

Le système de mesure utilise les incréments mesurés par l'unité de mesure inertielle UMI 20, un cap de référence et les sorties conventionnelles du récepteur GNSS 10. La plateforme de calcul temps réel 30, intégrée dans le dispositif réalise les calculs des données hybrides d'attitude A, de vitesse V et de position P. L'estimation d'attitude est réalisée de manière conventionnelle. Les positions AHRS sont estimées par triple intégration des mesures inertielles AHRS. Ces positions hybrides AHRS sont comparées avec les positions GNSS pour en déduire des corrections. Ces corrections sont appliquées sur les données hybrides au moyen de filtres correcteurs 34.

Plus précisément, le calcul des attitudes AHRS hybrides est réalisé dans la plateforme de calcul interne à l'équipement 30 qui est représentée sur la figure 3. Elle comporte une chaîne de trois intégrateurs 31, 32 et 33. L'intégrateur 31 est un intégrateur des vitesses angulaires $V_A$ issues de l'unité de mesure inertielle 20. Il fournit des attitudes hybrides $A_H$. L'intégrateur 32 est un intégrateur d'attitudes. Il fournit des vitesses hybrides $V_H$. L'intégrateur 33 est un intégrateur des positions. Il fournit des positions hybrides $P_H$. Le fonctionnement de ces intégrateurs s'apparente à celui des centrales inertielles. La plateforme de calcul inclut également une fonction de calcul de l'accélération de la pesanteur qui est ajoutée aux incréments accélérométriques intégrés, ainsi qu'une fonction de correction de l'accélération de Coriolis, pour prendre en compte le fait que l'intégration des accélérations se fait dans un référentiel non galiléen. Ces fonctions ne sont pas représentées sur la figure 3.

La mécanisation de la plateforme peut être réalisée en axes géographiques ou en axes liés à la plateforme. Les axes géographiques sont, par exemple, référencés Nord, Est, Down ou « NED ».

Chaque position hybride obtenue par intégration des données de l'UMI 20 est comparée à la même position obtenue par le système de positionnement 10 GNSS pour en déduire un écart. Les écarts sont obtenus en trois dimensions selon trois axes, par exemple sous forme d'écarts de latitude, de longitude et d'altitude dans le cas d'une mécanisation NED.

A partir de ces écarts, des corrections sont élaborées par des filtres correcteurs 34 à gains constants, intégrés à la plateforme de calcul. Les gains sont ajustables en fonction du temps de réponse et de la robustesse souhaitée. Des gains élevés conduisent à un temps de réponse court mais une plus grande sensibilité aux erreurs de position GNSS. Des gains petits conduisent à une grande robustesse aux erreurs de position GNSS.

Chaque filtre correcteur est dédié à une voie correspondant à un axe particulier. Par exemple, la première voie correspond à un écart de latitude, la seconde voie à un écart de longitude et la troisième voie à un écart d'altitude. Pour les écarts de latitude ou de longitude, le filtre correcteur produit des corrections de position, de vitesse, d'attitude et de précession. Pour les écarts d'altitude, le filtre correcteur produit uniquement des écarts d'altitude et de vitesse verticale.

Les gains Ki des filtres correcteurs sont calculés en établissant la fonction de transfert analytique du système. Ils sont définis en fonction de la constante de temps $\tau$ du système. Par exemple, dans le cas du filtre correcteur de latitude, les gains sont les suivants :

$$K3 = \frac{Rt}{(-g)\cdot\tau^4} \qquad\qquad K1 = \frac{+(4\xi^2+2)\cdot Rt}{\tau^2}.$$

$$K2 - \frac{4\xi Rt}{(-g)\cdot\tau^3} \qquad\qquad K0 = \frac{4\xi\cdot Rt}{\tau}$$

Rt étant le rayon terrestre, g étant l'accélération de la pesanteur et $\xi$ étant le coefficient d'amortissement. Ce coefficient est voisin de 1.

La valeur de $\tau$ dimensionne la réponse du système. Une constante de temps $\tau$ petite conduit à des corrections importantes et un meilleur suivi de l'évolution des écarts de position. Une constante de temps $\tau$ élevée conduit à des corrections plus faibles et un lissage plus important de l'évolution de l'écart de position.

Un des points délicats de ce type de système est l'estimation de l'erreur des données de sortie. Il est cependant important, dans un certain nombre d'applications, de fournir les données d'attitude avec une intégrité connue correspondant à la probabilité que l'erreur de mesure soit supérieure à un seuil déterminé, en prenant en compte les causes de défaillances possibles.

L'objet de l'invention est de borner ces erreurs de mesure de façon à garantir une intégrité donnée. Dans le système selon l'invention, l'intégrité des attitudes est assurée grâce à la production d'un rayon de protection, c'est-à-dire un seuil tel que l'erreur entre l'attitude vraie et l'attitude estimée n'est supérieure à ce seuil qu'en dessous d'une probabilité donnée. Dans un contexte aéronautique, selon les applications, cette probabilité varie entre $10^{-5}$/heure d'utilisation et $10^{-9}$/heure d'utilisation.

Ce seuil doit prendre en compte l'ensemble des contributions d'erreurs sur les attitudes AHRS hybrides. On identifie dans ce contexte :

- les erreurs dues aux capteurs inertiels ;
- les erreurs introduites par les asservissements retenus ;
- les erreurs dues aux entrées GNSS utilisées pour corriger les attitudes hybrides. Il faut prendre en compte les erreurs « courantes » liées à la précision du GNSS et les erreurs de type « panne du système GNSS ».

On modélise le rayon de protection HIL des attitudes AHRS hybrides sous la forme

$$HIL = H0_{DYN} + H1$$

Avec :

- *H0$_{DYN}$* : contribution des erreurs liée aux défauts des capteurs et à l'algorithme.
- H1 : contribution liées aux erreurs GNSS, prenant en compte l'hypothèse d'une panne GNSS.

En raison de la complexité du système, de la variété des comportements des erreurs capteurs, ou des cas d'utilisation du dispositif, un calcul analytique de H0$_{DYN}$ n'est pas réalisable. On l'estime donc à partir de simulations de Monte Carlo sur un modèle logiciel du système. Pour être couvrant vis-à-vis de l'ensemble des combinaisons d'erreurs dues aux capteurs et des différents cas d'utilisation, H0$_{DYN}$ est choisi égal à la valeur d'erreur d'attitude maximale correspondant au pire cas d'erreur identifié lors des simulations. A titre d'exemple, le nombre de simulations nécessaires à l'estimation de cette erreur peut être de $10^6$.

Le calcul de H1 peut être fait analytiquement. Les attitudes, vitesses et positions hybrides sont calculées par intégration successives des incréments inertiels, puis corrigées grâce au filtre correcteur à gains constants. En conséquence, l'ensemble du système est parfaitement connu et modélisable. Grâce à cette connaissance, il est possible de calculer la fonction de transfert du système H(p).

$$S(p) = H(p) \cdot E(p)$$

La fonction de transfert H(p) permet de décrire la sortie S(p) en fonction d'une entrée déterminée E(p). Le module de H(p) donne en particulier le coefficient multiplicateur entre l'amplitude d'une perturbation en entrée et la résultante en sortie. Les perturbations en entrée peuvent être sur les incréments inertiels accélérométriques ou gyrométriques et/ou des erreurs sur la position GNSS utilisée en référence.

Dans le cas de l'AHRS hybridée GNSS, on peut considérer la sortie « erreur des attitudes hybrides » en fonction de l'entrée « erreur sur la position GNSS ». En utilisant le module de cette fonction de transfert, pour une erreur de position ErrGNSS oscillant à une fréquence f, on peut calculer l'impact sur l'erreur d'attitude ErrATT à la même fréquence. En notant HE$_{rrGNSS \to ErrAtt}$ la fonction de transfert, on a alors la relation :

$$ErrATT(f) = H_{ErrGNSS \to ErrAtt}(f) \cdot ErrGNSS(f)$$

L'erreur sur la position GNSS peut revêtir différentes natures. Elle peut être une erreur « normale et rare » correspondant aux erreurs classiques du GNSS, une erreur oscillante ou une erreur liée à une panne du système GNSS. Dans tous les cas, la position GNSS est fournie avec une mesure de son intégrité ou « Horizontal Integrity Limit » HIL. Selon l'invention, le système GNSS garantit que sous une probabilité de panne donnée, l'erreur sur la position GNSS est en dessous de ce rayon. Au-dessus de ce rayon, le système GNSS se déclare en panne.

On utilise alors la fonction de transfert $H_{ErrGNSS \to ErrAtt}(f)$ pour calculer la réponse du système AHRS hybridé avec en entrée la valeur de HIL$_{GNSS}$. La sortie est alors le rayon d'intégrité des attitudes hybrides $RP_{ATT}(f)$ en faisant l'hypothèse que les erreurs GNSS oscillent à une fréquence donnée.

$$RP_{ATT}(f) = H_{ErrGNSS \to ErrAtt}(f) \cdot HIL_{GNSS}(f)$$

Pour borner cette erreur, on choisir la fréquence induisant la plus forte réponse, c'est-à-dire le maximum de la fonction de transfert. On peut alors écrire

$$H1 = \max(|H_{ErrGNSS \to ErrAtt}(f)|) HIL_{GNSS}$$

Le rayon de protection des attitudes hybrides AHRS est donc la somme de ces deux contributions.

$$HIL = H0_{DYN} + \max(|H_{ErrGNSS \to ErrAtt}(f)|) HIL_{GNSS}$$

L'ensemble des calculs nécessaires à la détermination des deux contributions du rayon de protection HIL ne pose pas de problèmes particuliers pour l'homme du métier et nécessitent uniquement des adaptations des logiciels d'une centrale AHRS.

Le système de mesure d'attitude d'un porteur selon l'invention présente de nombreux avantages détaillés ci-dessous.

Le système peut s'adapter à tout type de senseurs inertiels de classe AHRS. En particulier, le calcul du rayon de protection peut se faire dans un large spectre de dérives des centrales inertiels, compris entre 100°/h et 0.1°/h. La perte de performance des senseurs inertiels n'influence que peu la performance de la méthode, le HIL estimé étant dépendant essentiellement du HIL GNSS.

Le système selon l'invention permet de calculer des attitudes AHRS intègres avec un rayon de protection de l'ordre du degré pour une intégrité de $10^{-7}$/h à partir de constituants standards existant qui sont une centrale AHRS, un récepteur GNSS, un calculateur électronique.

La méthode de calcul des attitudes AHRS est simple. Elle se base sur un unique filtre à gains constants.

La méthode de calcul de l'intégrité est également simple et peu coûteuse en termes de charge de calcul temps réel. Le calcul d'intégrité dans les systèmes inertiels est généralement traité à l'aide d'algorithmes complexes utilisant plusieurs filtres de Kalman en parallèle. Dans le système selon l'invention, on utilise uniquement la connaissance de la fonction de transfert du filtre à gain constant. Il suffit de multiplier le HIL GNSS par une constante, calculée analytiquement à la conception du filtre correcteur et d'ajouter une constante. Cette solution peut donc être embarquée dans des systèmes peu complexes comportant des capacités de calcul limitées.

Le rayon de protection est majorant. En effet, les hypothèses d'intégrité réalisées sont majorantes par rapport aux conditions réelles dans la mesure où l'on retient le cas le plus défavorable. Ceci assure une grande pertinence à l'intégrité estimée.

Au final, le système selon l'invention est particulièrement bien adaptée à une utilisation aéronautique. Dans ce cas, l'architecture d'implantation comprend les éléments suivants :

- une centrale inertielle aéronautique de type AHRS ;
- un récepteur GNSS aéronautique ;
- un calculateur, qui peut être intégré à l'équipement AHRS.

**Revendications**

1. Système de mesure d'attitude d'un porteur, ledit système étant hybridé et comportant au moins :

   - un système (10) de positionnement par satellites ;
   - une unité de mesure (20) comportant trois gyromètres et trois accéléromètres ;
   - une électronique (30) de calcul des informations d'attitude du porteur à partir des informations issues du système de positionnement par satellites et de l'unité de mesure, l'électronique de calcul comportant un moyen de calcul d'un rayon angulaire de protection, c'est-à-dire un rayon angulaire tel que le risque que l'erreur entre l'attitude calculée et l'attitude vraie du porteur ne soit pas comprise à l'intérieur de ce rayon est inférieur à une probabilité donnée, ledit rayon étant égal à la somme de deux contributions, la seconde contribution étant égale aux erreurs induites sur les estimations d'attitude par les erreurs de position dues au système de positionnement par satellite, en prenant en compte l'hypothèse d'une panne du système de positionnement par satellites, ledit système de positionnement par satellites garantissant que, sous une probabilité de panne donnée, l'erreur sur la position est en-dessous d'un rayon d'intégrité, au-dessus de ce rayon d'intégrité, le système de positionnement par satellites se déclarant en panne, **caractérisé en ce que** la première contribution est égale aux erreurs d'attitudes liées à l'unité de mesure.

2. Système de mesure d'attitude d'un porteur selon la revendication 1, **caractérisé en ce que** la première contribution est égale à l'erreur de positionnement maximale obtenue à partir de simulations de Monte-Carlo prenant en compte l'ensemble des erreurs possibles de l'unité de mesure.

3. Système de mesure d'attitude d'un porteur selon l'une des revendications précédentes, **caractérisé en ce que** la seconde contribution est égale au produit :

   Du gain maximum d'une fonction de transfert de l'électronique de calcul de l'attitude du porteur, ladite fonction de transfert étant déterminée pour une fréquence d'oscillation de la position donnée par le système de positionnement par satellites ;
   Par la valeur du rayon de protection du système de positionnement par satellites, ladite valeur étant connue sous la terminologie « HIL », acronyme de « Horizontal Integrity Limit ».

4. Système de mesure d'attitude d'un porteur selon l'une des revendications précédentes, **caractérisé en ce que** l'électronique de calcul de l'attitude comporte trois intégrateurs (31, 32, 33) en série et un filtre correcteur (34) à gains constants, les données d'entrée du premier intégrateur (31) étant les informations de vitesses angulaires du porteur et les données d'entrée du deuxième intégrateur (32) étant les accélérations du porteur et le résultat du premier intégrateur, les données d'entrée du troisième intégrateur (33) étant le résultat du deuxième intégrateur initialisées par les informations de position données par le système de positionnement par satellites, les données de sortie du premier intégrateur étant les informations d'attitude du porteur dite attitude hybridée, les données de sortie du second intégrateur étant les informations de vitesse du porteur dite vitesse hybridée et les données de sortie du troisième intégrateur étant les informations de position du porteur dite position hybridée.

**5.** Système de mesure d'attitude d'un porteur selon l'une des revendications précédentes, **caractérisé en ce que** le rayon angulaire de protection est inférieur à 1 degré.

**6.** Système de mesure d'attitude d'un porteur selon l'une des revendications précédentes, **caractérisé en ce que** la probabilité est comprise entre $10^{-5}$/heure d'utilisation et $10^{-9}$/heure d'utilisation.

**7.** Système de mesure d'attitude d'un porteur selon l'une des revendications précédentes, **caractérisé en ce que** le porteur est un aéronef.

**Patentansprüche**

**1.** System zum Messen der Lage eines Trägers, wobei das System hybrid ist und mindestens Folgendes aufweist:

- ein Satellitenpositionierungssystem (10);
- eine Messeinheit (20), die drei Gyrometer und drei Beschleunigungsmesser aufweist;
- eine Elektronik (30) zum Berechnen der Lageinformationen des Trägers auf der Basis der von dem Satellitenpositionierungssystem und der Messeinheit erhaltenen Informationen,
wobei die Berechnungselektronik ein Mittel zum Berechnen eines Schutzwinkelradius aufweist, d. h. eines Winkelradius, bei dem das Risiko, dass der Fehler zwischen der berechneten Lage und der wahren Lage des Trägers nicht innerhalb dieses Radius liegt, kleiner als eine gegebene Wahrscheinlichkeit ist, wobei der Radius gleich der Summe von zwei Beiträgen ist,
wobei der zweite Beitrag den Fehlern entspricht, die durch die durch das Satellitenpositionierungssystem bedingten Positionsfehler in die Lageschätzungen hervorgerufen werden, unter Berücksichtigung der Annahme eines Ausfalls des Satellitenpositionierungssystems, wobei das Satellitenpositionierungssystem gewährleistet, dass unter einer gegebenen Ausfallwahrscheinlichkeit der Positionsfehler unterhalb eines Integritätsradius liegt, wobei oberhalb dieses Integritätsradius das Satellitenpositionierungssystem als ausgefallen gilt, **dadurch gekennzeichnet, dass** der erste Beitrag gleich den mit der Messeinheit verbundenen Lagefehlern ist.

**2.** System zum Messen der Lage eines Trägers nach Anspruch 1, **dadurch gekennzeichnet, dass** der erste Beitrag gleich dem maximalen Positionsfehler ist, der von Monte-Carlo-Simulationen unter Berücksichtigung aller möglichen Fehler der Messeinheit ermittelt wird.

**3.** System zum Messen der Lage eines Trägers nach einem der vorhergehenden Ansprüche, **dadurch gekennzeichnet, dass** der zweite Beitrag gleich dem folgenden Produkt ist:

der maximalen Verstärkung einer Übertragungsfunktion der Elektronik zur Trägerlageberechnung, wobei die Übertragungsfunktion für eine Oszillationsfrequenz der vom Satellitenpositionierungssystem gegebenen Position bestimmt wird;
und dem Wert des Schutzradius des Satellitenpositionierungssystems, wobei der Wert unter der Bezeichnung "HIL", Abkürzung für "Horizontal Integrity Limit", bekannt ist.

**4.** System zum Messen der Lage eines Trägers nach einem der vorhergehenden Ansprüche, **dadurch gekennzeichnet, dass** die Elektronik zur Trägerlageberechnung drei in Reihe geschaltete Integratoren (31, 32, 33) und ein Korrekturfilter (34) mit konstanten Verstärkungen aufweist, wobei die Eingangsdaten des ersten Integrators (31) die Informationen über Winkelgeschwindigkeiten des Trägers sind und die Eingangsdaten des zweiten Integrators (32) die Beschleunigungen des Trägers und das Ergebnis des ersten Integrators sind, wobei die Eingangsdaten des dritten Integrators (33) das Ergebnis des zweiten Integrators sind, die durch die Positionsinformationen des Satellitenpositionierungssystems initialisiert sind, wobei die Ausgangsdaten des ersten Integrators die Hybridlage genannten Lageinformationen des Trägers sind, wobei die Ausgangsdaten des zweiten Integrators die Hybridgeschwindigkeit genannten Geschwindigkeitsinformationen des Trägers sind und die Ausgangsdaten des dritten Integrators die Hybridposition genannten Positionsinformationen des Trägers sind.

**5.** System zum Messen der Lage eines Trägers nach einem der vorhergehenden Ansprüche, **dadurch gekennzeichnet, dass** der Schutzwinkelradius kleiner als 1 Grad ist.

**6.** System zum Messen der Lage eines Trägers nach einem der vorhergehenden Ansprüche, **dadurch gekennzeichnet, dass** die Wahrscheinlichkeit zwischen $10^{-5}$/Betriebsstunde und $10^{-9}$/Betriebsstunde liegt.

**7.** System zum Messen der Lage eines Trägers nach einem der vorhergehenden Ansprüche, **dadurch gekennzeichnet, dass** der Träger ein Luftfahrzeug ist.

**Claims**

**1.** A system for measuring the attitude of a carrier, said system being hybridised and having at least:

- a satellite positioning system (10);
- a measurement unit (20) having three gyrometers and three accelerometers;
- electronics (30) for computing the attitude information of the carrier from information obtained from the satellite positioning system and from the measurement unit,
the computation electronics having a means for computing an angular protection radius, that is to say an angular radius such that the risk of the error between the calculated attitude and the true attitude of the carrier not lying within this radius is less than a given probability, said radius being equal to the sum of two contributions,
the second contribution being equal to the errors induced on the attitude estimations by the position errors due to the satellite positioning system, taking into account an assumed failure of the satellite positioning system, said satellite positioning system guaranteeing that, subject to a given probability of failure, the error on the position is below an integrity radius, above this integrity radius, the satellite positioning system being declared as failed, **characterised in that** the first contribution is equal to the attitude errors related to the measurement unit.

**2.** The system for measuring the attitude of a carrier according to claim 1, **characterised in that** the first contribution is equal to the maximum positioning error obtained from Monte-Carlo simulations taking into account all of the possible errors of the measurement unit.

**3.** The system for measuring the attitude of a carrier according to one of the preceding claims, **characterised in that** the second contribution is equal to the product:

of the maximum gain of a transfer function of the electronics for computing the attitude of the carrier, said transfer function being determined for an oscillation frequency of the position given by the satellite positioning system;
by the value of the protection radius of the satellite positioning system, said value being known by the term "HIL", acronym for "Horizontal Integrity Limit".

**4.** The system for measuring the attitude of a carrier according to one of the preceding claims, **characterised in that** the attitude computation electronics have three integrators (31, 32, 33) in series and a constant-gain correcting filter (34), the input data of the first integrator (31) being the angular velocity information of the carrier and the input data of the second integrator (32) being the accelerations of the carrier and the result of the first integrator, the input data of the third integrator (33) being the result of the second integrator initialised by the position information given by the satellite positioning system, the output data of the first integrator being the attitude information of the carrier, called hybridised attitude, the output data of the second integrator being the velocity information of the carrier, called hybridised speed, and the output data of the third integrator being the position information of the carrier, called hybridised position.

**5.** The system for measuring the attitude of a carrier according to one of the preceding claims, **characterised in that** the angular protection radius is less than 1 degree.

**6.** The system for measuring the attitude of a carrier according to one of the preceding claims, **characterised in that** the probability lies between $10^{-5}$ /hour of use and $10^{-9}$/hour of use.

7. The system for measuring the attitude of a carrier according to one of the preceding claims, **characterised in that** the carrier is an aircraft.

[Fig. 1]

FIG. 1

[Fig. 2]

FIG. 2

[Fig. 3]

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3018447 A
- US 9341718 B
- US 5512903 A